# EUROPEAN PATENT APPLICATION

(11) **EP 4 310 761 A1**
(43) Date of publication of application: **24.01.2024**
(21) Application number: 23177293.0
(22) Date of filing: 05.06.2023
(51) Int. Cl.: G06Q 30/0207, G06Q 30/0251

(54) **MANAGEMENT SYSTEM**

(30) Priority: 22.07.2022 JP 2022117448
(71) Applicant: Toshiba TEC Kabushiki Kaisha, Tokyo 141-8562 (JP)
(72) Inventor: Nimiya, Shigeki, Tokyo, 141-8562 (JP); Yamashita, Naoki, Tokyo, 141-8562 (JP)
(74) Representative: Bandpay & Greuter

(57) **Abstract**

A management system for managing data of sales promotions for consumers, includes a touch point device configured to detect an action performed by a consumer and a server device that includes: a communication interface configured to communicate with the touch point device, a memory that stores first information in which the action performed by the consumer is associated with a sales promotion and one or more conditions, and a processor configured to: determine whether the action has been detected by the touch point device, upon determining that the action has been detected, acquire from the touch point device second information related to a location where the action has been performed, and determine whether the conditions associated with the action are satisfied based on the second information, and upon determining that the conditions are satisfied, execute computer code for carrying out the sales promotion associated with the action for the consumer.

## Description

### FIELD

Embodiments described herein relate generally to a management system, a server device, and a non-transitory computer readable medium storing a program for managing data of sales promotions for consumers.

### BACKGROUND

Traditionally, manufacturers and advertising companies plan and implement a variety of sales promotions for commodities. For example, conventionally, there has been proposed a technique of creating a promotion plan by collecting and analyzing detailed data of consumers and classifying them based on the detailed data.

However, in the conventional art, the consumer data for creating a promotion plan is collected by a point-of-sale (POS) system installed at a store. Therefore, the promotion provider cannot dynamically select a promotion applicable to a specific consumer depending on the situation.

### SUMMARY OF THE INVENTION

In order to solve the above-mentioned problems, there are provided a management system for managing data of sales promotions for consumers, a server device included therein and a non-transitory computer readable medium storing a program causing a computer to execute a data management method according to appended claims.

Embodiments of the present invention provide a server device capable of selecting in real time a consumer to which a promotion can be applied under various conditions.

A management system for managing data of sales promotions for consumers includes a touch point device configured to detect an action performed by a consumer and a server device. The server device includes: a communication interface configured to communicate with the touch point device, a memory that stores first information in which the action performed by the consumer is associated with a sales promotion and one or more conditions, and a processor. The processor is configured to: determine whether the action has been detected by the touch point device, upon determining that the action has been detected, acquire from the touch point device second information related to a location where the action has been performed, and determine whether the conditions associated with the action are satisfied based on the second information, and upon determining that the conditions are satisfied, execute computer code for carrying out the sales promotion associated with the action for the consumer.

### BRIEF DESCRIPTION OF THE DRAWINGS

FIG. 1 is a system diagram of a promotion management system according to an embodiment.
FIG. 2 is a hardware block diagram of a promotion management server according to an embodiment.
FIG. 3 is a functional block diagram of the promotion management server.
FIG. 4 is a diagram of a promotion registration screen according to an embodiment.
FIG. 5 is a schematic diagram of a first list according to an embodiment.
FIG. 6 is a schematic diagram of a second list according to an embodiment.
FIG. 7 is a flowchart of processing performed by the promotion management server.

### DETAILED DESCRIPTION

Hereinafter, embodiments will be described in detail with reference to the drawings. The present invention is not limited to the embodiments described below.

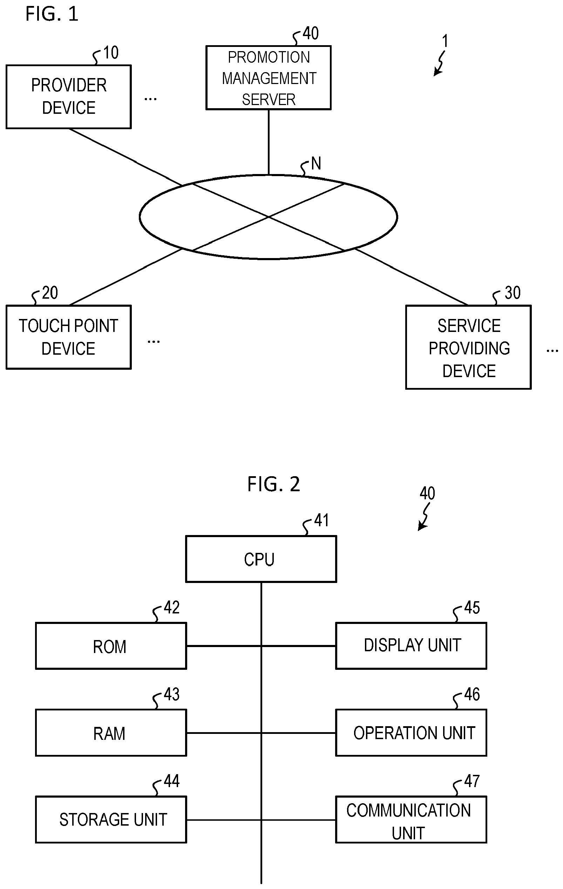

FIG. 1 is a system diagram of a promotion management system 1 according to an embodiment. As illustrated in FIG. 1, the promotion management system 1 includes a provider device 10, a touch point device 20, a service providing device 30, and a promotion management server 40.

The provider device 10, the touch point device 20, and the service providing device 30 are communicably connected to the promotion management server 40 via a network N such as the Internet. The numbers of provider devices 10, touch point devices 20, and service providing devices 30 connected to the network N are not particularly limited.

The provider device 10 is an information processing terminal operated by a provider who plans a promotion. Examples of the provider include a manufacturer that manufactures and sells a commodity, an advertisement agent that produces an advertisement, a retail store, and the like. In response to an instruction from the provider, the provider device 10 accesses the promotion management server 40, and registers promotion information indicating the contents of the promotion and the attributes of the consumer targeted for the promotion in the promotion management server 40.

The touch point device 20 serves as a touch point with the consumer. For example, the touch point device 20 may be any type of information processing device such as a smartphone, a personal computer, and a TV owned by the consumer.

Further, the touch point device 20 may be a device or a system provided in a facility available to a consumer. For example, the touch point device 20 may be a POS system or a POS terminal provided in a store. Further, the touch point device 20 may be a device or a system for recording and managing entry and exit to and from a store. Further, the touch point device 20 may be a device or a system for recording and managing entry and exit to and from a parking lot of a store. Further, the touch point device 20 may be a monitoring camera, a monitoring system, or the like provided in a store, a parking lot, or the like.

Further, as another example, the touch point device 20 may be a signage terminal, a vending machine, or the like provided in various places such as a store or a public facility. The touch point device 20 may be a ticket gate, a ticket vending machine, or the like provided at a train station. Further, the touch point device 20 may be a server device that receives a home delivery request from a consumer, a system that records and manages a home delivery status to a consumer, or the like.

The service providing device 30 is a server device or an information system that provides various information services. The service providing device 30 may be operated by, for example, a company that operates the promotion management system 1, or may be operated by a different company.

In response to a request from the promotion management server 40, the service providing device 30 provides information indicating the service provided thereby to the promotion management server 40. Although the information provided by the service providing device 30 is not particularly limited, it is preferable to provide information that can be used for determination of a condition to be described later.

For example, the service providing device 30 may be a weather information providing device. In this case, for example, when receiving a request including location information indicating a specific region, the weather information providing device outputs the current weather information about the region indicated by the location information as response information. Further, for example, when the weather information providing device receives a request including date and time information indicating a date and time together with the location information, the weather information providing device outputs the weather information corresponding to the date and time indicated by the date and time information in the area indicated by the location information as response information.

In addition, the service providing device 30 may be an image analysis device that analyzes image data of a still image or a video, and analyzes an action, a status, or the like of a person shown in the image. In this case, for example, when the image analysis device receives a request including image data captured in a store and instruction information for analyzing the attributes of the consumer and the companion potentially shown in the image, the image analysis device analyzes the image data and determines the attributes of the consumer and the companion, e.g., a single consumer, a group of consumers, or a consumer with one or more minors or children. Then, the service providing device 30 outputs the attributes of the consumer and the companion obtained by the analysis as response information.

Further, for example, when receiving a request including image data obtained by capturing the inside of a store, the image analysis devices determines the number of consumers shown in the image and how crowded the store is. Then, the service providing device 30 outputs, as response information, information indicating the number of consumers in the store and how crowded the store is obtained by the analysis.

Further, when the image analysis device receives a request including image data obtained by capturing an image of the inside of the store and instruction information for analyzing a traveling action of a specific consumer inside the store, the image analysis device analyzes a tendency of the traveling action such as a moving speed and a moving route of the specific consumer shown in the image, and a staying time at each location. Then, the service providing device 30 outputs, as response information, the tendency of the traveling action of the consumer obtained by the analysis (for example, in a hurry or the like).

In addition, the service providing device 30 may be a location information providing device that identifies a location of a consumer in a store or records his or her moving route therein by cooperating with a portable terminal such as a smartphone carried by the consumer. When receiving a request including information capable of specifying a consumer (e.g., a user ID), for example, the location information providing device outputs information indicating the present location and the moving route of the corresponding consumer as response information.

Further, the service providing device 30 may be a commodity management device that manages a stock quantity, best-before dates, sale time, display status, and the like of each commodity sold at stores in an integrated manner. In this case, for example, when a request including store identification information capable of identifying a store (e.g., a store ID) and commodity identification information capable of identifying a commodity (e.g., a commodity ID) is received, the commodity management device outputs, as response information, the sales status including the stock quantity of the commodity corresponding to the commodity ID at the store corresponding to the store ID and the like.

Note that any known methods can be used for providing an information service by the service providing device 30. In addition, image data captured in a store can be analyzed using a known technique such as a learned model in which the behavior of consumers in the store is learned.

The promotion management server 40 provides a promotional advertisement to a target consumer based on the contents of the promotion information registered by the provider device 10.

In the present embodiment, the promotion management server 40 is realized by a single server device, but the present invention is not limited thereto, and may be realized by a plurality of server devices by, for example, a technique such as cloud computing.

Hereinafter, a configuration of the promotion management server 40 will be described. First, a hardware configuration of the promotion management server 40 will be described with reference to FIG. 2. FIG. 2 is a hardware block diagram of the promotion management server 40.

As illustrated in FIG. 2, the promotion management server 40 includes a Central Processing Unit (CPU) 41, a Read Only Memory (ROM) 42 and a Random Access Memory (RAM) 43.

The CPU 41 is a processor that comprehensively controls each unit of the promotion management server 40. The ROM 42 stores various programs. The RAM 43 is a workspace for loading programs and temporarily storing various types of data.

The promotion management server 40 includes a storage unit 44, a display unit 45, an operation unit 46, and a communication unit 47.

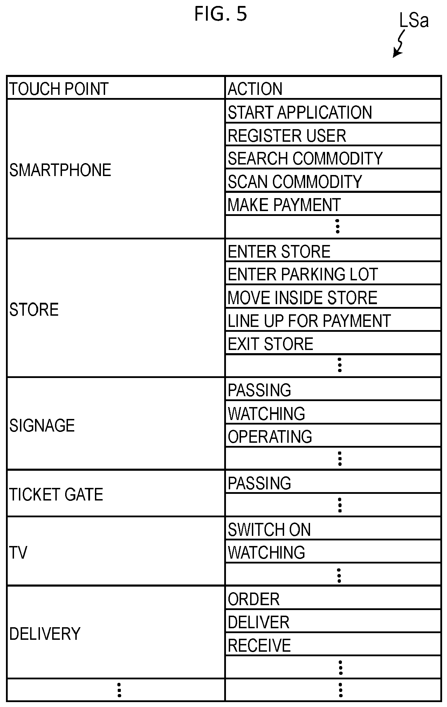

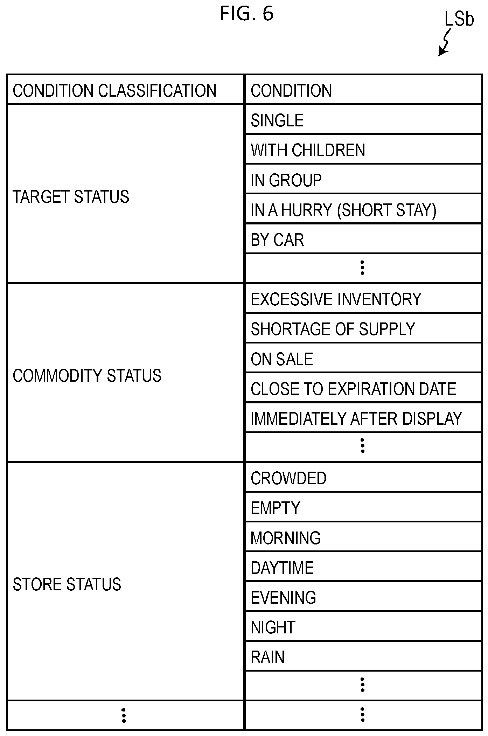

The storage unit 44 is constituted by a storage medium such as an HDD (Hard Disk Drive) or a flash memory, and maintains the stored data even if the power supply is cut off. The storage unit 44 stores programs that can be executed by the CPU 41 and various types of setting data. For example, the storage unit 44 stores a first list LSa (see FIG. 5), a second list LSb (see FIG. 6), and the like related to displaying a promotion registration screen to be described later. Further, the storage unit 44 has an area for storing promotion information registered by the provider device 10.

The display unit 45 includes a display device such as a Liquid Crystal Display (LCD). The display unit 45 displays various types of data under the control of the CPU 41. The operation unit 46 includes a keyboard, a pointing device, and the like. The operation unit 46 outputs a signal corresponding to an operation input by an operator to the CPU 41. The operation unit 46 may be a touch panel provided on a display screen of the display unit 45.

The communication unit 47 is a communication interface connectable to the network N. The communication unit 47 communicates with external devices such as the provider device 10, the touch point device 20, and the service providing device 30 via the network N.

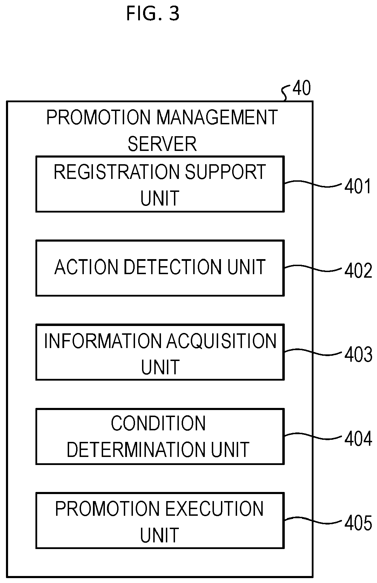

Next, a functional configuration of the promotion management server 40 will be described with reference to FIG. 3. FIG. 3 is a functional block diagram of the promotion management server 40.

As illustrated in FIG. 3, the promotion management server 40 has a functional configuration including a registration support unit 401, an action detection unit 402, an information acquisition unit 403, a condition determination unit 404, and a promotion execution unit 405.

The functions of some or all of the units 401-405 may be implemented by one or more programs stored in the ROM 42 and/or the storage unit 44 and executed by the CPU 41. In addition, the functions of some or all of the units 401-405 may be implemented by hardware such as a dedicated circuit or the like mounted in the promotion management server 40.

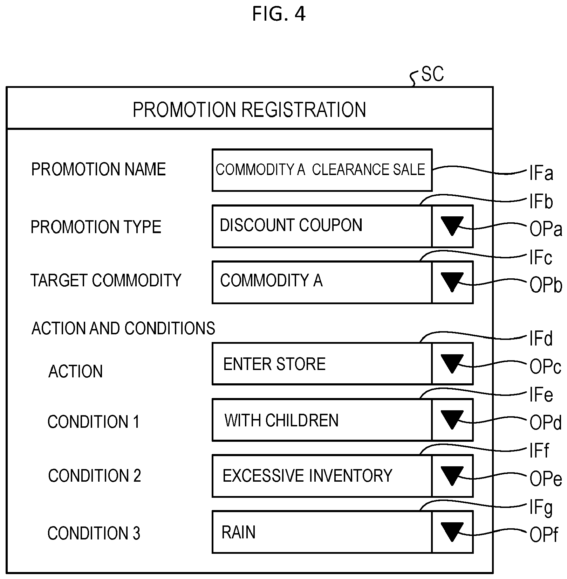

The registration support unit 401 supports creation and registration of promotion information. Specifically, the registration support unit 401 provides data for the provider device 10 to generate a screen for supporting creation of promotion information (hereinafter, also referred to as a promotion registration screen). For example, upon receiving access from the provider device 10, the registration support unit 401 controls the communication unit 47 to transmit screen information for displaying the promotion registration screen illustrated in FIG. 4 to the provider device 10.

FIG. 4 is a diagram illustrating an example of a promotion registration screen SC provided by the registration support unit 401. As illustrated in FIG. 4, the promotion registration screen SC includes input fields IFa - IFc for inputting a promotion name, a promotion type, and a target commodity.

The input field IFa is for inputting the promotion name. In the input field IFa, any character string that is a name for identifying a promotion can be input.

The input field IFb is for inputting the type of promotion to be executed. In the input field IFb, one type can be selectively input from among a plurality of promotion types set in advance. In FIG. 4, the input field IFb is a pull-down menu, and one type can be selectively input from among a plurality of promotion types registered in advance in the drop-down list by operating a button OPa.

The promotion type that can be entered is not particularly limited. For example, as the promotion type, in addition to the discount coupon illustrated in FIG. 4, an issuance of a reduction coupon, reward points, a free sample, or the like can be input. Further, the promotion type may be public relations, such as commercials (e.g., broadcasting, streaming, etc.), a social media post, and the like.

The input field IFc is for inputting a trade name or the like of a commodity to be promoted. In the input field IFc, one commodity can be selectively input from a plurality of commodities set in advance. In FIG. 4, the input field IFc is a pull-down menu format, and the commodity name can be selectively input from the plurality of the commodity names registered in advance in the drop-down list by operating a button OPb.

Further, the promotion registration screen SC includes input fields IFd - IFg for inputting conditions for specifying a target consumer. The input field IFd is for inputting an action performed by the consumer. In the input field IFd, one action can be selectively input from a plurality of actions set in advance. In FIG. 4, the input field IFd is used as a pull-down menu, and one action can be selectively input from among a plurality of actions registered in advance in the first list LSa which is a drop-down list by operating a button OPc.

FIG. 5 is a schematic diagram illustrating an example of the first list LSa. The first list LSa includes one or more fields of touch points and actions. Each of the fields of touch points stores information indicating a type of touch point or touch point device 20. In FIG. 5, "smartphone", "store", "signage", "ticket gate", "TV", and "delivery" are the types of touch points. In addition, each of the fields of actions stores information indicating an action to be taken by the consumer in association with the type of the corresponding touch point.

For example, when the type of touch point is "smartphone", the actions of the consumer that can be detected by the smartphone is stored. For example, "start application", "register user", "search commodity", "scan commodity", "make payment", and the like are stored. Here, the user registration, the commodity search, the commodity scan, and the payment are actions performed when the application running on the smartphone is for the consumer to scan and pay for a commodity at a store (hereinafter, also referred to as a POS application).

When using the POS application, the consumer registers his/her user ID and the like at the time of first use. After registering the user ID, the consumer can search for a commodity sold at the store and browse information about the designated commodity via the POS application. Further, the consumer can register the commodity ID in the smartphone or the like by scanning a code symbol such as a bar code attached to the commodity using the camera provided in the smartphone. Then, the consumer can check out the registered items by performing the payment operation. The smartphone detects these actions.

Further, for example, when the type of touch point is "store", actions of a consumer that can be detected by various devices or systems provided in the store are stored. For example, actions such as entering a store, entering a parking lot, moving inside a store, lining up for payment, and exiting a store are stored. Note that any known techniques can be used to detect those actions.

When the type of touch point is "signage", actions of a consumer that can be detected by a digital signage terminal are stored. For example, actions such as passing, watching, and operating a signage terminal, are stored. Any known techniques can be used to detect those actions. For example, the action of the consumer can be detected via a camera provided in the signage terminal, a digitizer, a touch panel, or the like.

Further, for example, when the type of touch point is "ticket gate", actions of a consumer that can be detected by a ticket gate are stored. As an example, an action such as passing is stored. In this case, the ticket gate may detect that the user ID or the like has been read from the IC card-type ticket carried by the consumer.

Also, for example, when the type of touch point is "TV", actions of a consumer that can be detected via a TV are stored. For example, actions such as switching on and watching are stored. Also, for example, when the type of touch point is "delivery", actions of a consumer that can be detected via a delivery service are stored. For example, actions such as order, deliver, receive, etc. are stored. Any methods can be used to detect such actions.

The registration support unit 401 reads a plurality of actions registered in the first list LSaso that the provider device 10 can display a pull-down menu in the input field IFd in which one action can be selected from the actions. The operator of the promotion registration screen SC can input one action to the input field IFd by operating the pull-down menu of the input field IFd. FIG. 4 illustrates an exemplary case where the action "enter store" is input to the input field IFd.

The input fields IFe to IFg are for inputting additional conditions for performing the promotion when the corresponding action is detected. In each of the input fields IFe to IFg, one condition can be selectively input from among a plurality of conditions set in advance. In FIG. 4, the input fields IFe to IFg are shown in the form of a pull-down menu. The operator can selectively enter one condition from among a plurality of conditions registered in advance in the second list LSb which is a drop-down list by operating buttons OPd to OPf.

FIG. 6 is a schematic diagram illustrating an example of the second list LSb. The second list LSb includes one or more fields of condition classifications and conditions. In each of the fields of condition classifications, information indicating a classification of conditions is stored. In FIG. 6, "target status", "commodity status", and "store status" are stored as the condition classification. In addition, information indicating each of various conditions corresponding to the condition classification is stored in each of the fields of conditions.

For example, in a case where the condition classification is "target status", conditions related to consumers such as "single", "with children", "in group", "in a hurry (short stay)", and "by car" are stored in the corresponding fields of conditions.

In the case where the condition classification is "commodity status", conditions related to the sales status of a commodity such as "excessive inventory", shortage of supply", "on sale", "close to expiration date", and "immediately after display" are stored in the corresponding fields of conditions. It is assumed that the commodity to be promoted is the commodity input in the input field IFc, but the present invention is not limited thereto, and other commodities may be promoted. For example, in a case where this condition classification is used in combination with the action "scan commodity", the commodity read by the commodity scan may be considered as the target commodity and the conditions are checked to perform the corresponding promotion.

Further, when the condition classification is "store status", conditions related to statuses of a store inside and outside, such as "crowded", "empty", "morning", "daytime", "evening", "night", "rain", and the like, are stored in the fields of conditions. In this case, it is preferable that the store that is the determination target of the conditions is a store in which an action of "enter store" is detected.

The registration support unit 401 reads the conditions registered in the second list LSb such that the provider device 10 can display a pull-down menu in which one condition can be selected from the conditions on the input fields IFe to IFg. The operator of the promotion registration screen SC operates any of the pull-down menus in the input fields IFe to IFg to input one action in the corresponding input field. In FIG. 4, the input field IFe is "with children", the input field IFf is "excessive inventory", and the input field IFg is "rain".

Although FIG. 4 illustrates an example in which three input fields of conditions are provided, the number of the input fields is not limited to this. For example, one input field of a condition may be displayed, and a new input field of another condition may be added and deleted by an operation of a separately provided addition button or deletion button. Further, it is not necessary to input the conditions to all of the input fields, and it is assumed that the number of conditions to be input can be adjusted depending on the action or target consumer.

Upon receiving an instruction from the provider device 10 that the input of the promotion registration screen SC has been completed, the registration support unit 401 registers various types of information input through the promotion registration screen SC as promotion information in the storage unit 44. For example, the registration support unit 401 stores the provider ID identifying the provider device 10 and the promotion information related to the provider device 10 in the storage unit 44 in association with each other.

The action detection unit 402 detects an action of the consumer via the touch point device 20. Specifically, the action detection unit 402 detects an action set in the promotion information from among the actions of the consumer detected by the touch point device 20. Note that the action detection unit 402 may identify the touch point device 20 in which the action set in the promotion information may be performed based on the set of the type of the touch point device 20 and the action stored in the first list LSa.

When the action detection unit 402 detects an action, the information acquisition unit 403 acquires status information indicating the status of the consumer who has performed the action or the status around the location where the action has been performed.

Further, the information acquisition unit 403 cooperates with the service providing device 30 to derive, from the acquired status information, determination information that can be compared with the condition set in the promotion information. Specifically, the information acquisition unit 403 controls the communication unit 47 to transmit, to the service providing device 30, a request including the status information and indicating the processing to be performed on the status information. Then, the information acquisition unit 403 acquires the response information transmitted from the service providing device 30 as the determination information.

Here, the operation of the information acquisition unit 403 will be described using the promotion information corresponding to the promotion registration screen of FIG. 4 as an example. First, the information acquisition unit 403 acquires, as status information, image data obtained by capturing an image of the detection location in the store at the detection time when the "enter store" action is detected with respect to the condition "with children". Next, the information acquisition unit 403 controls the communication unit 47 to transmit a request including the acquired image data and indicating analysis of the attributes of the consumer and the companion to the service providing device 30 that performs image analysis processing. Then, the information acquisition unit 403 acquires response information indicating the attributes of the consumer and the companion from the service providing device 30.

In another example, the information acquisition unit 403 acquires, as the status information, the store ID of the store where the "enter store" action is detected for the condition "excessive inventory". Further, the information acquisition unit 403 acquires the commodity ID of the "commodity A" set as the target commodity. Next, the information acquisition unit 403 controls the communication unit 47 to transmit a request including the acquired store ID and the commodity ID to the service providing device 30 that performs inventory control processing. Then, the information acquisition unit 403 acquires, from the service providing device 30, response information indicating the sales status such as the inventory status of the "commodity A" corresponding to the commodity ID sold at the store corresponding to the store ID.

In yet another example, the information acquisition unit 403 acquires, as status information, location information indicating a location of the store where the "enter store" action is detected for the condition "rain". Next, the information acquisition unit 403 controls the communication unit 47 to transmit a request including the acquired location information to the service providing device 30 that performs weather information processing. Then, the information acquisition unit 403 acquires response information indicating the weather around the store from the service providing device 30. Here, the information acquisition unit 403 may also acquire the date and time information indicating the date and time at which the action is detected, and control the communication unit 47 to transmit the acquired date and time information to the service providing device 30 together with the location information.

Status information can be acquired from any device or system, and it is preferable to switch the source of the status information according to the characteristics of the status information to be acquired. For example, the information acquisition unit 403 may acquire status information from the touch point device 20 where an action has been detected, or may acquire status information from another touch point device 20 provided at a location where the action has been detected (for example, a monitoring system or the like).

The condition determination unit 404 determines whether the determination information derived or acquired from status information by the information acquisition unit 403. satisfies the condition set in the promotion information.

For example, in the case of the promotion information corresponding to the promotion registration screen of FIG. 4, the condition determination unit 404 compares the condition "with children" with the attribute of the consumer acquired from the service providing device 30, and determines that the condition is satisfied when the attribute of the consumer indicates "with children". Further, for example, the condition determination unit 404 compares the condition "excessive inventory" with the inventory quantity of the commodity acquired from the service providing device 30, and determines that the condition is satisfied when the inventory quantity exceeds a predetermined threshold value. Further, for example, the condition determination unit 404 compares the condition "rain" with the weather acquired from the service providing device 30, and determines that the condition is satisfied when the weather indicates "rain".

When the determination information acquired by the information acquisition unit 403 satisfies the condition set in the promotion information, the promotion execution unit 405 performs the promotion set in the promotion information for the consumer who has performed the preset action.

Specifically, when the condition determination unit 404 determines that all the conditions set in the promotion information are satisfied, the promotion execution unit 405 executes the promotion of the target commodity with the promotion type set in the promotion information to the consumer who has performed the preset action, that is, the consumer who is the promotion target.

For example, in the case of the promotion information corresponding to the promotion registration screen of FIG. 4, when the condition determination unit 404 determines that all of the conditions 1 to 3 are satisfied, the promotion execution unit 405 issues a discount coupon for the "commodity A" to the consumer who has performed the action, i.e., "enter store".

Note that the promotion execution unit 405 performs a promotion such as issuing a discount coupon to the touch point device 20 in which an action is detected, but the present invention is not limited thereto. For example, in a configuration in which a user ID can be acquired via the touch point device 20, the user having the user ID may receive a promotion via the device associated with the user ID.

In this case, the promotion management server 40 may store in advance a contact list in which a contact such as an e-mail address is registered in association with the user ID of each consumer. In this case, the promotion execution unit 405 can perform a promotion such as issuing a discount coupon for the device associated with the user ID acquired via the touch point device 20.

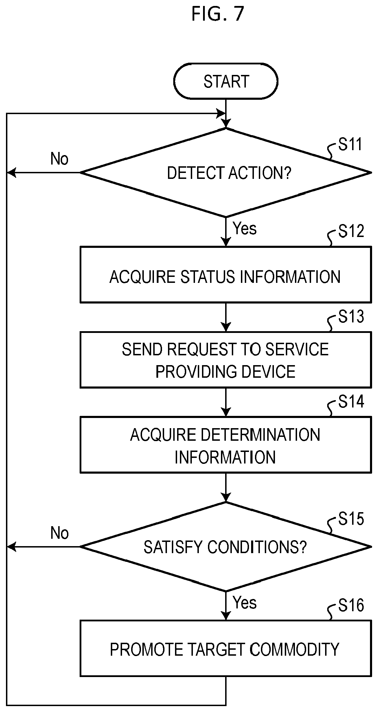

Hereinafter, an example of processing performed by the promotion management server 40 will be described with reference to FIG. 7. Here, FIG. 7 is a flowchart of processing performed by the promotion management server 40. It is assumed that the promotion information generated based on the promotion registration screen of FIG. 4 is stored in the promotion management server 40.

First, the action detection unit 402 waits until an action set in the promotion data is performed by a consumer via the touch point device 20 (step S11; No). When the action detection unit 402 detects that the action set in the promotion data has been performed via the touch point device 20 (step S11; Yes), the process proceeds to step S12.

Next, the information acquisition unit 403 acquires status information for deriving determination information based on the condition set in the promotion information (step S12). For example, the information acquisition unit 403 acquires status information from the touch point device 20 in which the action has been detected or from another touch point device 20 in the vicinity of the touch point device 20.

Subsequently, the information acquisition unit 403 controls the communication unit 47 to transmit to the service providing device 30 a request including the status information and instructing to process the status information (step S13). Next, the information acquisition unit 403 acquires the response information transmitted from the service providing device 30 as the determination information(step S14).

Subsequently, the condition determination unit 404 compares each of the conditions set in the promotion information with the determination information acquired in the step S14, and determines whether all the conditions are satisfied (step S15). Here, when it is determined that some or all of the conditions are not satisfied (step S15; No), the condition determination unit 404 returns the process to step S11.

On the other hand, when it is determined that all the conditions are satisfied (step S15; Yes), the condition determination unit 404 proceeds to step S16. The promotion execution unit 405 performs a promotion of the target commodity with the promotion type set in the promotion information to the consumer who has performed the action (step S16), and returns the process to the step S11.

As described above, when a predetermined action performed by a consumer is detected via the touch point device 20, the promotion management server 40 of the present embodiment acquires status information indicating the status of the consumer who has performed the action or the status around the location where the action has been performed, and when the acquired status information satisfies a predetermined condition, executes a promotion for the consumer who has performed the action.

As a result, the promotion management server 40 can select a target consumer for a promotion under various conditions derived from status information using a predetermined action as a trigger. Therefore, in the promotion management server 40, it is possible to select in real time a target consumer for a predetermined promotion, and it is possible to perform the promotion under the conditions intended by the provider. In addition, in the promotion management server 40, a promotion such as a sales promotion can be performed only on a target consumer who has performed a particular action under one or more preset conditions so as to restrict the execution of the promotion on a non-target consumer. Therefore, in the promotion management server 40, the promotion execution cost can be reduced and effectiveness of the promotion can be improved.

Further, the promotion management server 40 cooperates with an external service (e.g., the service providing device 30), derives from status information determination information that can be compared with various conditions, and determines whether the derived determination information satisfies the conditions.

As a result, the promotion management server 40 can select a target consumer for a promotion while effectively utilizing the status information obtained from the touch point device 20 other than the POS system of a store. Therefore, in the promotion management server 40, it is possible to flexibly select a consumer to be promoted, and it is possible to perform the promotion under the conditions intended by the provider.

It should be noted that the above-described embodiments can be modified and implemented as appropriate by changing a part of the configuration or function of each of the above-described devices. Therefore, in the following, some modifications according to the above-described embodiments will be described as other embodiments. Note that, in the following, differences from the above-described embodiments will be mainly described, and detailed descriptions of the same points as those described above will be omitted. Further, the modification examples described below may be implemented individually or in combination as appropriate.

### (Modification 1)

In the above-described embodiments, the promotion management server 40 causes the provider device 10 to display a promotion registration screen SC for registering promotion information, but a server device other than the promotion management server 40 may cause the provider device 10 to display the promotion registration screen SC.

In this case, the other server device includes the registration support unit 401 described above, and causes the provider device 10 to display the promotion registration screen SC. The other server device transmits the promotion information generated from the data input on the promotion registration screen to the promotion management server 40 or locally stores the promotion information. In the latter case, the promotion management server 40 refers to the promotion information stored in the other server device and executes the above-described processing.

Thus, the promotion management server 40 of the first modification can achieve the same effects as those of the above-described embodiments. Further, in the present modification example, it is possible to reduce the load associated with the display of the promotion registration screen SC by the promotion management server 40.

### (Modification 2)

In the above-described embodiments, a promotion is performed when all of the conditions set in promotion information is satisfied, but the present invention is not limited thereto. For example, a promotion may be executed on condition that a part of the conditions set in promotion information is satisfied.

The programs executed by the devices of the above-described embodiments are stored in a ROM, a storage unit, or the like in advance. The programs executed by the devices of the above-described embodiments may be stored in and copied from a non-transitory computer readable recording medium such as a CD-ROM, a flexible disk (FD), or a CD-R, Digital Versatile Disk (DVD) in an installable format or an executable format.

Further, the program executed by each device of the above-described embodiments may be stored in a computer connected to a network such as the Internet, and may be downloaded via the network.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims and their equivalents are intended to cover such forms or modifications as would fall within the scope of the disclosure.

## Claims

1. A management system for managing data of sales promotions for consumers, comprising:
a touch point device (20) configured to detect an action performed by a consumer; and
a server device that includes:
a communication interface (47) configured to communicate with the touch point device,
a memory that stores first information in which the action performed by the consumer is associated with a sales promotion and one or more conditions, and
a processor configured to:
determine whether the action has been detected by the touch point device,
upon determining that the action has been detected, acquire from the touch point device second information related to a location where the action has been performed, and determine whether the conditions associated with the action are satisfied based on the second information, and
upon determining that the conditions are satisfied, execute computer code for carrying out the sales promotion associated with the action for the consumer.

2. The management system according to claim 1, wherein
the communication interface is configured to communicate with an external device, and
the processor is configured to:
control the communication interface to transmit to the external device a request for processing the second information, and
determine whether the conditions are satisfied using a response from the external device.

3. The management system according to claim 2, wherein
the touch point device includes a camera configured to capture an image of the consumer at a store,
the conditions associated with the action in the first information indicate a particular number of companions of the consumer or a particular attribute thereof, and
the processor of the server device
acquires from the touch point device the image as the second information,
controls the communication interface to transmit to the external device the request for analyzing the image and transmitting, as the response, a number of companions of the consumer shown in the image or an attribute thereof, and
determines that the conditions are satisfied when the number of companions or the attribute transmitted from the external device is consistent with the particular number of companions or the particular attribute stored in the first information.

4. The management system according to claim 3, wherein
the touch point device detects the consumer's entrance to the store, and
the attribute indicates whether a companion of the consumer is a child.

5. The management system according to any one of claims 2 to 4, wherein
the touch point device is configured to store a store ID of a store where the touch point device is installed,
the conditions associated with the action in the first information indicate a particular stock quantity of a particular commodity sold at the store, and
the processor of the server device
acquires from the touch point device the store ID as the second information,
controls the communication interface to transmit to the external device the request for transmitting a stock quantity of the particular commodity of the store corresponding to the store ID, and
determines that the conditions are satisfied when the stock quantity of the particular commodity transmitted from the external device is consistent with the particular stock quantity stored in the first information.

6. The management system according to claim 5, wherein
the touch point device detects the consumer's entrance to the store, and
the particular stock quantity of the particular commodity stored in the first information indicates that the store has an excessive stock quantity of the particular commodity.

7. The management system according to any one of claims 2 to 6, wherein
the touch point device is installed at a store and configured to transmit location information indicating a store location of the store,
the conditions associated with the action in the first information indicate a particular weather, and
the processor of the server device
acquires from the touch point device the location information as the second information,
controls the communication interface to transmit to the external device the request for transmitting weather information indicating a weather at the store location, and
determines that the conditions are satisfied when the weather indicated by the weather information is consistent with the particular weather stored in the first information.

8. The management system according to claim 7, wherein
the touch point device detects the consumer's entrance to the store, and
the particular weather is rain.

9. The management system according to any one of claims 1 to 8, wherein
the communication interface is configured to communicate with an external terminal, and
the processor is configured to, upon receipt of a request from the external terminal, control the communication interface to transmit, to the external terminal, screen information for displaying a screen through which the action performed by the consumer can be registered in the memory in association with the sales promotion and the conditions.

10. The management system according to any one of claims 1 to 9, wherein the touch point device is a mobile device operated by the consumer in a store.

11. A server device for managing data of sales promotions for consumers, for a management system according to any one of claims 1 to 10 comprising:
a communication interface configured to communicate with a touch point device configured to detect an action performed by a consumer;
a memory that stores first information in which the action performed by the consumer is associated with a sales promotion and one or more conditions; and
a processor configured to:
determine whether the action has been detected by the touch point device,
upon determining that the action has been detected, acquire from the touch point device second information related to a location where the action has been performed, and determine whether the conditions associated with the action are satisfied based on the second information, and
upon determining that the conditions are satisfied, execute computer code for carrying out the sales promotion associated with the action for the consumer.

12. The server device according to claim 11, wherein
the communication interface is configured to communicate with an external device, and
the processor is configured to:
control the communication interface to transmit to the external device a request for processing the second information, and
determine whether the conditions are satisfied using a response from the external device.

13. The server device according to claim 12, wherein
the touch point device includes a camera configured to capture an image of the consumer at a store,
the conditions associated with the action in the first information indicate a particular number of companions of the consumer or a particular attribute thereof, and
the processor
acquires from the touch point device the image as the second information,
controls the communication interface to transmit to the external device the request for analyzing the image and transmitting, as the response, a number of companions of the consumer shown in the image or an attribute thereof, and
determines that the conditions are satisfied when the number of companions or the attribute transmitted from the external device is consistent with the particular number of companions or the particular attribute stored in the first information.

14. The server device according to claim 13, wherein
the touch point device detects the consumer's entrance to the store, and
the attribute indicates whether a companion of the consumer is a child.

15. A non-transitory computer readable medium storing a program causing a computer to execute a method comprising:
storing in a memory first information in which an action performed by a consumer is associated with a sales promotion and one or more conditions;
communicating with a touch point device configured to detect the action and determining whether the action has been detected,
upon determining that the action has been detected, acquiring from the touch point device second information related to a location where the action has been performed, and determining whether the conditions associated with the action are satisfied based on the second information; and
upon determining that the conditions are satisfied, executing computer code for carrying out the sales promotion associated with the action for the consumer.
